# EUROPEAN PATENT APPLICATION

(11) **EP 2 587 353 A2**
(43) Date of publication of application: **01.05.2013**
(21) Application number: 12190026.0
(22) Date of filing: 25.10.2012
(51) Int. Cl.: G06F 3/044

(54) **Touch panel**

(30) Priority: 28.10.2011 TW 100139471
(71) Applicant: Wistron Corporation, New Taipei City 221 (TW)
(72) Inventor: Wang, Kuei-Ching, 325 Longtan Township (TW); Lin, Ta-Hu, 112 Taipei City (TW); Hsu, Chih-Ming, 330 Taoyuan City (TW); Liu, Chien-Chung, 324 Pingzhen City (TW)
(74) Representative: Becker Kurig Straus

(57) **Abstract**

A touch panel includes a plurality of metal connecting units and a plurality of transparent conductive units. The transparent conductive units are correspondingly connected with the metal connecting units, respectively. Each transparent conductive unit has a plurality of transparent conductors. In one of the transparent conducting units, the transparent conductors are arranged in parallel, and every transparent conductor has one end connecting to the same one of the metal connecting units.

## Description

### BACKGROUND OF THE INVENTION

### Field of Invention

The present invention relates to a panel and, in particular, to a touch panel.

### Related Art

Various kinds of touch input devices have been widely applied to different electronic products such as mobile phones and tablet computers. Accordingly, the user can simply move his/her finger on the touch input panel to control the cursor or to input instructions or texts.

In general, the touch panels include resistive, capacitive, ultrasonic, and infrared types. Although the resistive touch panel is the most popular one, the applications of the capacitive touch panel have become more important in the recent years.

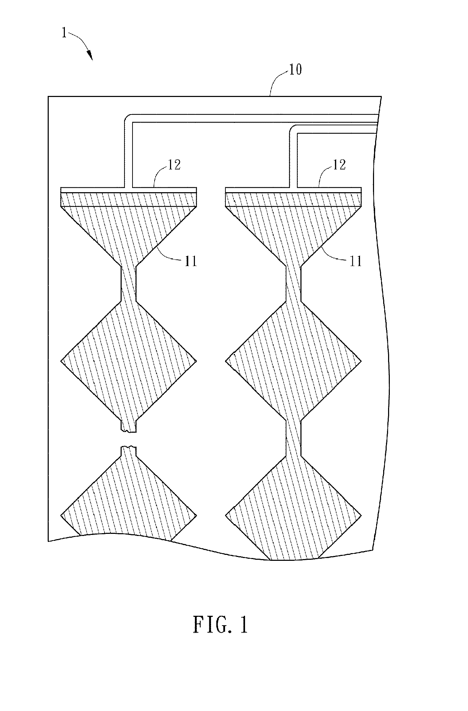

As shown in FIG. 1, a conventional touch panel 1 includes a substrate 10, a plurality of wires 11 formed on the substrate 10, a plurality of metal electrodes 12, and insulation layers (not shown). The substrate 10 is usually made of transparent material such as glass. The wires 11 are mostly disposed within the touch input area of the substrate 10, and the ends of the wires 11 are connected with the metal electrodes 12. The metal electrodes 12 can further connect to a circuit board or external circuit.

However, if any one of the wires 11 is broken or damaged, this wire 11 can not function normally. In other words, there is a portion of the touch panel 1 can not provide the touch input function, so the entire product is failed.

Therefore, it is an important subject of the present invention to provide a touch panel that can decrease the affect caused by the broken or damaged wire and thus increase the production yield.

### SUMMARY OF THE INVENTION

In view of the foregoing, an object of the present invention is to provide a touch panel that can decrease the affect caused by the broken or damaged wire.

To achieve the above object, the present invention discloses a touch panel including a plurality of metal connecting units and a plurality of transparent conductive units. The transparent conductive units are correspondingly connected with the metal connecting units, respectively. Each transparent conductive unit has a plurality of transparent conductors. In one of the transparent conducting units, the transparent conductors are arranged in parallel, and every transparent conductor has one end connecting to the same one of the metal connecting units.

In one embodiment, the touch panel further includes a plurality of transparent decoration patterns disposed within one of the transparent conductive units and independently located between the transparent conductors.

In one embodiment, the shape of the transparent decoration patterns is polygonal, circular, or elliptic. The polygonal shape comprises regular or irregular polygons, such as triangles, quadrangles, pentagons, hexagons, octagons, rhombuses, diamonds, or the likes.

In one embodiment, the transparent conductors and the transparent decoration patterns are formed by the same process, such as a photolithograph process or a printing process. The transparent conductors and the transparent decoration patterns are formed on the same layer, and are made of indium tin oxide (ITO) or transparent conductive polymer.

In one embodiment, one of the transparent conductive units further includes at least one transparent connecting portion for connecting two of the transparent conductors.

In one embodiment, the touch panel further includes a substrate defined with a touch input area and a periphery area. The transparent conductors are distributed within the touch input area, and the metal connecting units are distributed within the periphery area. Every transparent conductor has one end connects to the same one of the metal connecting units at the periphery area.

In one embodiment, the material of the substrate comprises glass, film, or plastic. Herein, the plastic material comprises polymethylmethacrylate (PMMA).

In one embodiment, the transparent conductive units are all disposed on a first surface of the substrate, and an extension direction of a part of the transparent conductive units is perpendicular to that of the residual transparent conductive units.

In one embodiment, some of the transparent conductive units are disposed on a first surface of the substrate, while the residual transparent conductive units are disposed on a second surface of the substrate, and an extension direction of the transparent conductive units disposed on the first surface is perpendicular to that of the transparent conductive units disposed on the second surface.

In one embodiment, the touch panel further includes a first substrate and a second substrate, which are together defined with a touch input area and a periphery area. Parts of the metal connecting units and parts of the transparent conductive units are disposed on the first substrate, and the residuals of the metal connecting units and the transparent conductive units are disposed on the second substrate. The transparent conductors are distributed within the touch input area, and the metal connecting units are distributed within the periphery area. Every transparent conductor has one end connects to the same one of the metal connecting units at the periphery area. The extension direction of the transparent conductors disposed on the first substrate is perpendicular to the extension direction of the transparent conductors disposed on the second substrate. Moreover, the touch panel may further includes a plurality of transparent decoration patterns disposed within one of the transparent conductive units disposed on the first substrate and independently located between the transparent conductors, while no transparent decoration pattern is disposed within the transparent conductive units disposed on the second substrate.

In one embodiment, the every transparent conductor has one end connected to one of the metal connecting units, and the other end connected another one of the metal connecting units.

In one embodiment, each of the transparent conductors includes a plurality of non-line-segment patterns and line-segment patterns, which are alternately connected in a row.

As mentioned above, in the touch panel of the present invention, one metal connecting unit can connect with a plurality of transparent conductors. Accordingly, if one of the transparent conductors is broken or damaged, the residual transparent conductors can still function normally, thereby increasing the yield of the touch panel. In addition, the transparent decoration patterns may be disposed within the transparent conductive unit and independently located between the transparent conductors, so that they can not affect the operation of the transparent conductors. Besides, the materials of the transparent decoration pattern and the transparent conductor are the same, so that the color difference therebetween can be reduced and will not be observed by the user. Accordingly, the user can not see the transparent conductor and the transparent decoration pattern from the view side.

### BRIEF DESCRIPTION OF THE DRAWINGS

The invention will become more fully understood from the detailed description and accompanying drawings, which are given for illustration only, and thus are not limitative of the present invention, and wherein:

FIG. 1 is a schematic diagram showing a conventional touch panel;

FIG. 2 to FIG. 4 are schematic diagrams showing touch panels according to a preferred embodiment of the present invention;

FIG. 5A is a schematic diagram showing another touch panel according to the preferred embodiment of the present invention;

FIG. 5B is a cross-section view along the line A-A' of FIG. 5A; and

FIGS. 5C to 5E are sectional views of different touch panels of the invention.

### DETAILED DESCRIPTION OF THE INVENTION

The present invention will be apparent from the following detailed description, which proceeds with reference to the accompanying drawings, wherein the same references relate to the same elements.

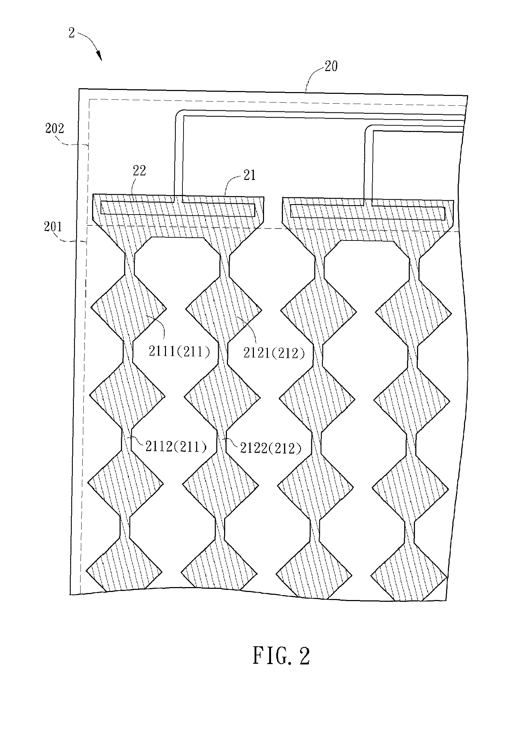

FIG. 2 is a schematic diagram showing a touch panel 2 according to a preferred embodiment of the present invention. Referring to FIG. 2, the touch panel 2 includes a plurality of metal connecting units 22 and a plurality of transparent conductive units 21. The metal connecting units 22, which are made of metals with high conductivity (e.g. silver), can be configured as electrodes for connecting with the circuit board or external circuits. The transparent conductive units 21 are correspondingly connected with the metal connecting units 22, respectively. Each transparent conductive unit 21 has a plurality of transparent conductors 211 and 212. In one of the transparent conducting units 21, the transparent conductors 211 and 212 are arranged in parallel, and both the transparent conductors 211 and 212 have one end connecting to the same one of the metal connecting units 22. In addition, the transparent conductors 211 and 212 of different transparent conductive units 21 do not connect to each other.

In this embodiment, one end of the transparent conductor 211 and one end of the transparent conductor 212 are directly connected to each other. The transparent conductor 211 includes a plurality of non-line-segment patterns 2111 and line-segment patterns 2112, which are alternately connected in a row. Similarly, the transparent conductor 212 includes a plurality of non-line-segment patterns 2121 and line-segment patterns 2122, which are alternately connected in a row. The non-line-segment patterns 2111 and 2121 are, for example but not limited to, triangles, quadrangles, circles, or other polygons. In this embodiment, the non-line-segment patterns 2111 and 2121 are quadrangles. Besides, each of the transparent conductors 211 and 212 can have a long shape.

The touch panel 2 further includes a substrate 20, which is defined with a touch input area 201 and a periphery area 202. The transparent conductors 211 and 212 are distributed within the touch input area 201, and the metal connecting units 22 are distributed within the periphery area 202. One end of the transparent conductor 211 and one end of the transparent conductor 212 are connected to the same one of the metal connecting units 22 at the periphery area 202.

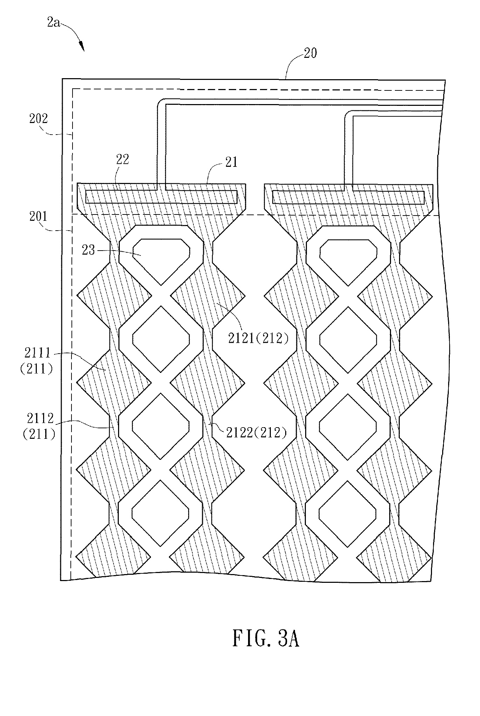

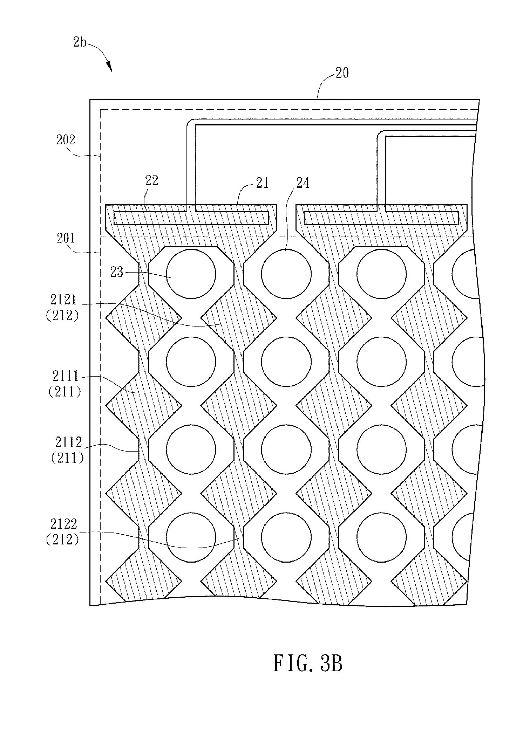

FIGS. 3A and 3B are schematic diagrams showing a touch panel 2a and a touch panel 2b according to the preferred embodiment of the present invention. Each of the touch panels 2a and 2b further includes a plurality of a plurality of transparent decoration patterns 23, which are disposed within one of the transparent conductive units 21 and independently located between the transparent conductors 211 and 212.

In this embodiment, the transparent decoration patterns 23 and the transparent conductors 211 and 212 can be formed by a single process such as a photolithograph process or a printing process. The transparent decoration patterns 23 and the transparent conductors 211 and 212 are formed on the same layer over the substrate 20, and are made of indium tin oxide (ITO) or transparent conductive polymer.

The transparent decoration patterns 23 can be configured as any shape. For example, as shown in FIG. 3A, the transparent decoration patterns 23 is configured as a polygon similar to a rhombus or a diamond; otherwise, as shown in FIG. 3B, the transparent decoration patterns 23 is configured as a circle or an ellipse. Of course, the polygon may include regular or irregular polygons, such as triangles, quadrangles, pentagons, hexagons, octagons, rhombuses, diamonds, or the likes. Since the transparent decoration patterns 23 are not connected with the transparent conductors 211 and 212, the configuration of the transparent decoration patterns 23 can not affect the function of the transparent conductors 211 and 212. Besides, the transparent decoration patterns 23 and the transparent conductors 211 and 212 can be made of the same material, so that the color difference therebetween can be reduced and will not be observed by the user from the view side of the touch panel 2a. Accordingly, the user can not easily observe the configuration of the transparent conductor 211 and 212 while viewing the touch panel 2a.

As shown in FIG. 3A, the transparent decoration patterns 23 are only configured within the transparent conductive units 21 and are not configured in the area between different transparent conductive units 21. As shown in FIG. 3B, the transparent decoration patterns 23 are configured within the transparent conductive units 21, and a plurality of additional transparent decoration patterns 24 are configured within the area between different transparent conductive units 21.

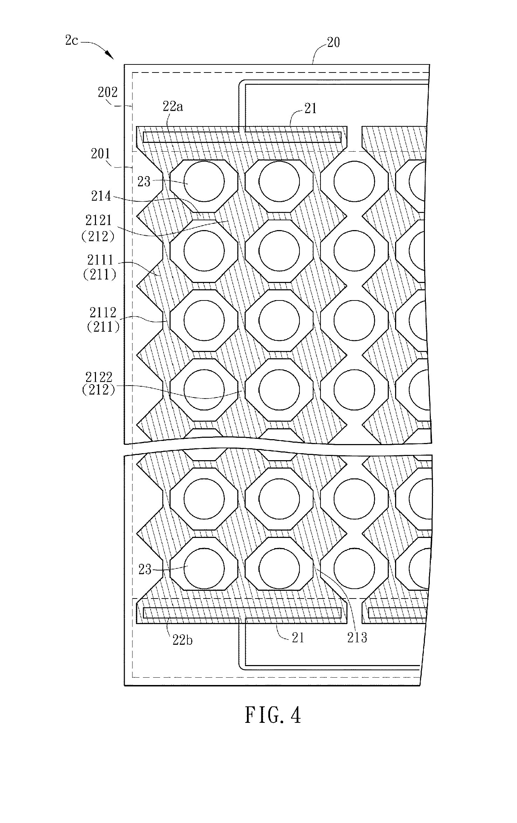

FIG. 4 is a schematic diagram showing a touch panel 2c according to the preferred embodiment of the present invention. In the touch panel 2c, each of the conductive units 21 includes a plurality of transparent conductors 211 to 213. Every transparent conductor 211 to 213 has two ends connecting to two metal connecting units 22a and 22b, respectively. In more details, one end of the transparent conductor 211, one end of the transparent conductor 212 and one end of the transparent conductor 213 are together connected to a metal connecting unit 22a, while the other end of the transparent conductor 211, the other end of the transparent conductor 212 and the other end of the transparent conductor 213 are together connected to another metal connecting unit 22b.

The conductive units 21 may further include a plurality of transparent connecting portions 214 for connecting two of the transparent conductors 211 to 213 (e.g. transparent conductors 211 and 212, or transparent conductors 212 and 213). In this embodiment, the transparent connecting portion 214 can connect the non-line-segment patterns 2111 and 2121 of the adjacent transparent conductors 211 and 212. Accordingly, if one of the transparent conductors is broken or damaged, the residual transparent conductor can still function normally. Moreover, the broken or damaged transparent conductor can further connect to the adjacent normal transparent conductor through the transparent connecting portion, so that it can also still function normally, thereby further increasing the yield of the touch panel 2c.

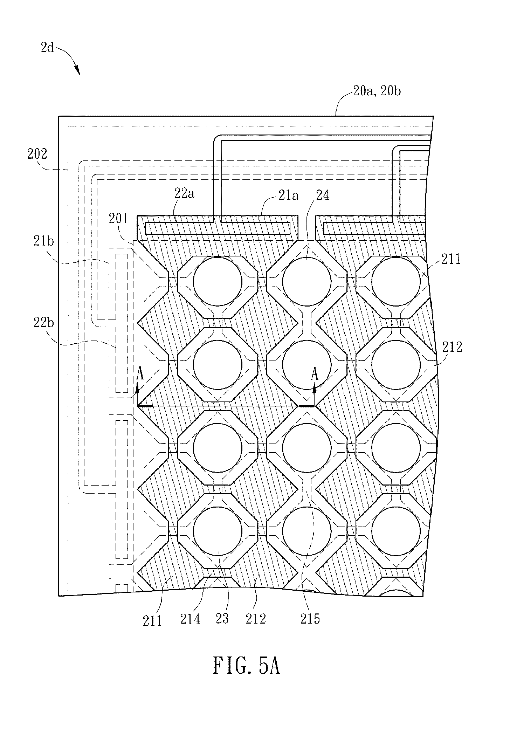

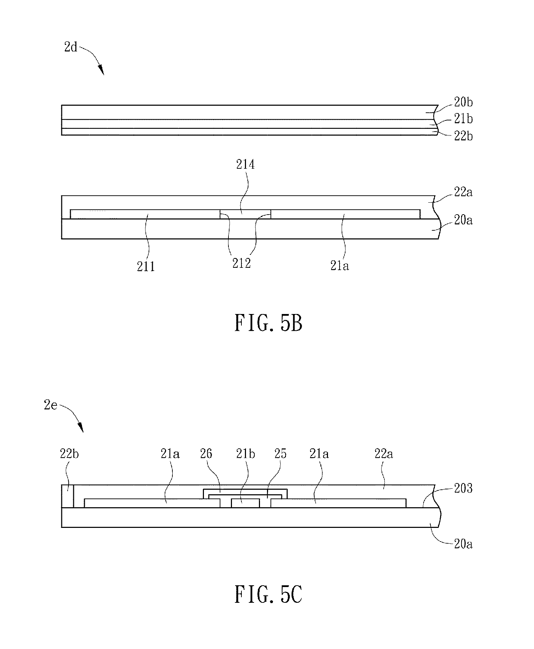

FIG. 5A is a schematic diagram showing another touch panel 2d according to the preferred embodiment of the present invention; and FIG. 5B is a cross-section view along the line A-A' of FIG. 5A. Referring to FIGS. 5A and 5B, the touch panel 2d includes a first substrate 20a and a second substrate 20b. The first substrate 2a and the second substrate 20b are together defined with a touch input area 201 and a periphery area 202. Parts of the metal connecting units 22a and parts of the transparent conductive units 21a are disposed on the first substrate 20a, and the residual metal connecting units 22b and the residual transparent conductive units 21b are disposed on the second substrate 20b. The transparent conductors 211 and 212 are distributed within the touch input area 201, and the metal connecting units 22a and 22b are distributed within the periphery area 202. One end of the transparent conductor 211 and one end of the transparent conductor 212 are connected to the same metal connecting unit 22a or 22b at the periphery area 202. The extension direction of the transparent conductors 211 and 212 disposed on the first substrate 20a is perpendicular to the extension direction of the transparent conductors 211 and 212 disposed on the second substrate 20b. For example, the extension direction of the transparent conductors 211 and 212 disposed on the first substrate 20a is in the X-axis direction, while the extension direction of the transparent conductors 211 and 212 disposed on the second substrate 20b is in the Y-axis direction; and vice versa.

On the substrate 20a, a plurality of transparent connecting portion 214 are configured to connect the transparent conductors 211 and 212. Similarly, one the substrate 20b, a plurality of transparent connecting portion 215 are configured to connect the transparent conductors 211 and 212. The cross-linked portions between the transparent conductors 211 and 212 of different substrates 20a and 20b can serve as the touch input points. Otherwise, the cross-linked portions between the transparent conductors 211 and 212 of the substrates 20a and the connecting portions 215 of the substrate 20b can serve as the touch input points. Similarly, the cross-linked portions between the transparent conductors 211 and 212 of the substrates 20b and the connecting portions 214 of the substrate 20a can also serve as the touch input points. Accordingly, the configuration of the connecting portions can increase the amount of the effective touch input points.

FIGS. 5C to 5E are sectional views of different touch panels of the invention. Except for the aspect with two substrates 20a and 20b as shown in FIGS. 5A and 5B, the touch panel of the invention may include only a single substrate. As shown in FIG. 5C, the transparent conductive units 21a, 21b and the metal connecting units 22a, 22b are all disposed on the first surface 203 of the only substrate (first substrate 20a), and they are connected through the cross portion 26, which is located on the insulation portion 25. As shown in FIG. 5D, the transparent conductive units 21a, 21b and the metal connecting units 22a, 22b are all disposed on the first surface 203 of the only substrate (first substrate 20a), and an insulation portion 25 is configured between the transparent conductive units 21a and 21b. As shown in FIG. 5E, the transparent conductive units 21a, 21b and the metal connecting units 22a, 22b are disposed on the first surface 203 and the second surface 204 of the only substrate (first substrate 20a).

In order to provide better touch control effect, in the above aspects of disposing the transparent conductive units 21a, 21b and the metal connecting units 22a, 22b on either the first surface 203 or both of the first surface 203 and the second surface 204, the extension direction of some transparent conductors is perpendicular to that of the residual transparent conductors. Preferably, the extension direction of some transparent conductors is in the X-axis direction, while the extension direction of the residual transparent conductors is in the Y-axis direction (referring to FIG. 5A).

The most important is that the single substrate has three functions. One function is to be used for configuring the transparent conductive units to provide original touch control function. The second function is to be used as a protector for protecting the inside wires and components because the single substrate, such as the substrate of the touch panel 2e or 2f, is disposed at the operation side of the touch panel. Moreover, in practice, since the substrate covers the periphery circuits and other components to be hidden, the third function is to provide the shielding and decoration effect, which is benefit for the fully planar of touch panels.

A plurality of transparent decoration patterns 23 are disposed within one of the transparent conductive units 21a, which are disposed on the first substrate 20a, and independently located between the transparent conductors 211 and 212, while no transparent decoration pattern (neither the transparent decoration patterns 23 nor the transparent decoration patterns 24) is configured within the transparent conductive units 21b, which are disposed on the second substrate 20b. The outer surface of the first substrate 20a is the operation surface of the touch panel 2d for the user to press and control.

In the above embodiments, the number of the transparent conductors in a single transparent conductive unit is two or three. In practice, the number of the transparent conductors in a single transparent conductive unit can be more than three, and the transparent conductors are together connected to one metal connecting unit.

In the above embodiments, the substrate can be made of glass, films or plastic materials such as PMMA. The touch panel is a hard or flexible touch panel. When the touch panel is a hard touch panel, the material of the substrate is glass; otherwise, when the touch panel is a flexible touch panel, the material of the substrate is film, plastic, or flexible glass.

In the above embodiments, the shapes and dimensions of the transparent conductors are similar, but in practice, they can be different.

In the above embodiments, the shape of the transparent decoration patterns can be in any shape such as triangle, quadrangle, rhombus, diamond, circle, ellipse, or polygons. The transparent decoration patterns can be disposed within the transparent conductive units, and preferably disposed optionally between different transparent conductive units. In other words, the shapes and arrangements of the transparent decoration patterns can be any of the previously mentioned aspects or their modifications or combinations.

In one embodiment, the transparent conductive units, the transparent conductors, the transparent decoration patterns, the metal connecting units, and/or the connecting wires can be formed by printing processes such as relief printing, gravure printing, planographic printing, screen printing, or the likes. During the printing process, the printing material can be a photo conductive material or a radiation cured conductive material, and the desired patterns are formed through a proper selective curing process. In more specific, the selective curing process is to provide a radiation to selectively irradiate the photo conductive material or radiation cured conductive material so as to solidify a part of the photo conductive material or radiation cured conductive material, and to remove the residual non-solidified part. The solidification of the part of the printing material can be carried out by photolithography technology, which is to dispose a photo mask on the printing material. The above process allows the patterns with smaller width and interval, and still has the benefits of printing and photolithography processes, thereby sufficiently decreasing the manufacturing cost.

In addition, when manufacturing the metal connecting units and the connecting wires, the photo conductive material or radiation cured conductive material may include a silver gel and ink. Herein, the silver gel contains nano-silver or micro-silver particles.

To sum up, in the touch panel of the present invention, one metal connecting unit can connect with a plurality of transparent conductors. Accordingly, if one of the transparent conductors is broken or damaged, the residual transparent conductors can still function normally, thereby increasing the yield of the touch panel. In addition, the transparent decoration patterns may be disposed within the transparent conductive unit and independently located between the transparent conductors, so that they can not affect the operation of the transparent conductors. Besides, the materials of the transparent decoration pattern and the transparent conductor are the same, so that the color difference therebetween can be reduced and will not be observed by the user. Accordingly, the user can not see the transparent conductor and the transparent decoration pattern from the view side.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A touch panel, comprising:
a plurality of metal connecting units; and
a plurality of transparent conductive units correspondingly connected with the metal connecting units, respectively, wherein each of the transparent conductive units has a plurality of transparent conductors, the transparent conductors in one of the transparent conducting units are arranged in parallel, and every transparent conductor has one end connecting to the same one of the metal connecting units.

2. The touch panel of claim 1, further comprising:
a plurality of transparent decoration patterns disposed within one of the transparent conductive units and independently located between the transparent conductors.

3. The touch panel of claim 2, wherein the shape of the transparent decoration patterns is polygonal, circular, or elliptic.

4. The touch panel of claim 2, wherein the material of the transparent conductors and the transparent decoration patterns comprises indium tin oxide (ITO) or transparent conductive polymer.

5. The touch panel of claim 1, wherein one of the transparent conductive units further comprises:
at least one transparent connecting portion for connecting two of the transparent conductors.

6. The touch panel of claim 1, further comprising:
a substrate defined with a touch input area and a periphery area;
wherein the transparent conductors are distributed within the touch input area, the metal connecting units are distributed within the periphery area, and every transparent conductor has one end connects to the same one of the metal connecting units at the periphery area.

7. The touch panel of claim 6, wherein the material of the substrate comprises glass, film, or plastic.

8. The touch panel of claim 6, wherein the transparent conductive units are all disposed on a first surface of the substrate, and an extension direction of a part of the transparent conductive units is perpendicular to that of the residual transparent conductive units.

9. The touch panel of claim 6, wherein some of the transparent conductive units are disposed on a first surface of the substrate, while the residual transparent conductive units are disposed on a second surface of the substrate, and an extension direction of the transparent conductive units disposed on the first surface is perpendicular to that of the transparent conductive units disposed on the second surface.

10. The touch panel of claim 1, further comprising:
a first substrate; and
a second substrate, wherein the first substrate and the second substrate are together defined with a touch input area and a periphery area;
wherein parts of the metal connecting units and parts of the transparent conductive units are disposed on the first substrate, and the residuals of the metal connecting units and the transparent conductive units are disposed on the second substrate;
wherein the transparent conductors are distributed within the touch input area, the metal connecting units are distributed within the periphery area, and every transparent conductor has one end connects to the same one of the metal connecting units at the periphery area; and
wherein the extension direction of the transparent conductors disposed on the first substrate is perpendicular to the extension direction of the transparent conductors disposed on the second substrate.

11. The touch panel of claim 10, further comprising:
a plurality of transparent decoration patterns disposed within one of the transparent conductive units disposed on the first substrate and independently located between the transparent conductors;
wherein there are no transparent decoration pattern disposed within the transparent conductive units disposed on the second substrate.

12. The touch panel of claim 1, wherein every transparent conductor has one end connected to one of the metal connecting units, and another end connected another one of the metal connecting units.

13. The touch panel of claim 1, wherein the touch panel is a hard or flexible touch panel.

14. The touch panel of claim 1, wherein each of the transparent conductors comprises a plurality of non-line-segment patterns and line-segment patterns, which are alternately connected in a row.
